# NOUVEAU FASCICULE DE BREVET EUROPEEN

(11) **EP 0 734 810 B2**
(45) Date de publication et mention de la décision concernant l'opposition: **03.03.2004**
(45) Mention de la délivrance du brevet: 28.07.1999
(21) Numéro de dépôt: 96400571.4
(22) Date de dépôt: 19.03.1996
(51) Int. Cl.: B23K 35/38, B23K 9/16

(54) **Mélange gazeux de protection et procédé de soudage à l'arc de pièces en acier inoxydable**
Schutzgasgemisch und Verfahren zum Lichtbogenschweissen von Werkstücken aus rostfreiem Stahl
Shielding gas mixture and process for arc welding of stainless steel workpieces

(30) Priorité: 29.03.1995 FR 9503714
(43) Date de publication de la demande: 02.10.1996
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Rouault, Philippe, 78300 Poissy (FR); Diot, Henri, 95310 Saint Ouen L'Aumone (FR)
(74) Mandataire: Le Moenner, Gabriel

(56) Documents cités:
- EP-A- 0 163 379
- FR-A- 2 007 096
- US-A- 3 770 932
- US-A- 5 306 358
- WELDING AND METAL FABRICATION, vol. 62, no. 9, Octobre 1994, HAYWARDS HEATH GB, pages 379-382, XP000476360 R. WIKTOROWICZ ET AL: "Shielding gas developments for TIG welding of duplex and super duplex stainless steels."
- PATENT ABSTRACTS OF JAPAN vol. 4, no. 57 (M-009), 26 Avril 1980 & JP-A-55 024739 (HITACHI), 22 Février 1980,
- WELDING IN THE WORLD, vol. 31, no. 6, Novembre 1993, OXFORD GB, pages 436-437, XP000415837 G. CREFFIELD ET AL: "Influence of shielding gases on the corrosion resistance of duplex stainless steel GTA welds."

## Description

La présente invention concerne les mélanges gazeux de protection pour le soudage à l'arc d'aciers inoxydables austénitiques suivant les techniques de soudage à l'arc dites TIG ou GTAW (Gas Tungstene Arc Welding), plus particulièrement pour le soudage d'aciers inoxydables austéno-ferritiques contenant de l'azote, dits aciers duplex ou super-duplex.

La présente invention a pour objet de proposer des mélanges gazeux de protection permettant d'améliorer le soudage d'aciers inoxydables, en particulier de garantir de bonnes propriétés de résistance à la corrosion, d'augmenter la valeur de la charge à la rupture et de réduire les émissions nocives, tout en garantissant une bonne maniabilité en soudage manuel dans toutes les positions, notamment en position de soudage dite "plafond" ou "en corniche'' avec une faible usure de l'électrode et en conservant une bonne stabilité de l'arc.

Pour ce faire, selon une caractéristique de l'invention, le mélange gazeux comprend, de 5 à 15 %, de préférence de 8 à 10 % d'hélium, de 1,5 à 2,5 %, de préférence de 1,5 à 2 % d'azote, le solde étant l'argon.

La présente invention a également pour objet un procédé de soudage de pièce en acier inoxydable, comprenant les étapes de former un arc électrique entre une électrode non consommable et la pièce, et de protéger l'arc par un mélange gazeux de protection tel que défini ci-dessus.

Les aciers inoxydables dits duplex et super-duplex présentent une excellente tenue à la corrosion par piqûre comparativement aux autres nuances d'aciers inoxydables en raison de leur micro-structure biphasée austénitique/ferritique, de leur teneur en azote et en autres éléments, tels que le chrome et le molybdène. Lors du soudage par procédé GTAW, la forte dilution qui peut résulter de ce procédé ainsi que l'analyse des métaux de base et des fils d'apport peuvent conduire à un rapport volumique déséquilibré dans le sens d'une teneur excessive en ferrite, sauf si, par exemple, le fil d'apport contient une concentration excédentaire en nickel par rapport au métal de base. Toutefois, les métaux d'apport ne sont pas suffisamment sur-alliés en azote pour assurer une bonne résistance à la corrosion des soudures. C'est pourquoi il a été envisagé d'adjoindre des quantités relativement importantes, supérieures à 5 % d'azote, dans le gaz de protection, ce qui s'est toutefois traduit par des effets néfastes sur la stabilité de l'arc ne convenant pas du tout pour le soudage en manuel, ainsi que par des problèmes de compacité de la soudure et d'usure notable de l'électrode.

Le document "Welding and Metal fabrication", vol 62, n°9, octobre 1994, Haywards Heath GB, pages 379 - 382, décrit un mélange gazeux de protection à base d'Argon pour le soudage d'aciers inoxydables, contenant 1,1% d'azote et 20% d'hélium selon un premier mode de réalisation, ou 2,25% d'azote et 20% d'hélium selon un autre exemple.

Le mélange gazeux selon la présente invention présente un ensemble de caractéristiques avantageuses, notamment l'obtention d'un bon équilibre austénite-ferrite, garantissant, dans toutes les positions, une bonne maniabilité en assurant un compromis optimisé entre une bonne résistance à la corrosion du métal déposé, une compacité acceptable des soudures une faible usure de l'électrode, une amélioration de l'aspect de cordon, ainsi qu'une réduction des émissions d'ozone.

Un mélange ternaire préféré selon l'invention est constitué d'un mélange d'environ 88 % d'argon, 10 % d'hélium et 2 % d'azote, ce mélange, convenant tout particulièrement au soudage des aciers duplex et superduplex, étant également tout à fait adapté au soudage des nuances inoxydables austénitiques dopées à l'azote, l'enrichissement associé à la teneur en azote du gaz de protection étant suffisant, nonobstant cette faible teneur, pour s'affranchir de l'absence d'apport d'azote va le fil d'apport.

## Revendications

1. Mélange gazeux de protection à base d'argon pour le soudage à l'arc manuel ou automatique d'aciers inoxydables comprenant:
- de 5 à 15 % d'hélium,
- de 1,5 à 2,5 % d'azote,
le solde étant de l'argon.

2. Mélange gazeux selon la revendication 1 comprenant:
- de 8 à 10 % d'hélium ;
- de 1,5 à 2 % d'azote.

3. Mélange gazeux temaire selon la revendication 2 comprenant: environ 10 % d'hélium, environ 2 % d'azote, le solde étant l'argon.

4. Procédé de soudage de pièce en acier inoxydable comprenant les étapes de former un arc électrique entre une électrode non consommable et la pièce, et de protéger l'arc par un mélange gazeux de protection, **caractérisé en ce que** le mélange gazeux de protection est conforme à l'une des revendications précédentes.

## Claims

1. Argon-based shielding gas mixture for the manual or automatic arc welding of stainless steels, comprising:
- from 5 to 15% of helium,
- from 1.5 to 2.5% of nitrogen,
the balance being argon.

2. Gas mixture according to Claim 1, comprising:
- from 8 to 10% of helium,
- from 1.5 to 2% of nitrogen.

3. Ternary gas mixture according to Claim 2, comprising approximately 10% of helium and approximately 2% of nitrogen, the balance being argon.

4. Process for welding a stainless steel workpiece, comprising the steps of forming an electric arc between a non-consumable electrode and the workpiece and of protecting the arc with a shielding gas mixture, **characterized in that** the shielding gas mixture is in accordance with one of the preceding claims.

## Patentansprüche

1. Schutzgasgemisch auf Argonbasis zum manuellen oder automatischen Lichtbogenschweißen von rostfreien Stählen, das folgendes enthält:
- von 5 bis 15% Helium,
- von 1,5 bis 2,5% Stickstoff,
Rest Argon.

2. Gasgemisch nach Anspruch 1, das folgendes enthält:
- von 8 bis 10% Helium,
- von 1,5 bis 2% Stickstoff.

3. Ternäres Gasgemisch nach Anspruch 2, das ca. 10% Helium, ca. 2% Stickstoff, Rest Argon enthält.

4. Verfahren zum Schweiß eines Werkstücks aus rostfreiem Stahl, wobei man zwischen einer nicht abschmelzenden Elektrode und dem Werkstück einen Lichtbogen erzeugt und den Lichtbogen durch ein Schutzgasgemisch schützt, **dadurch gekennzeichnet, daß** das Schutzgasgemisch einem der vorhergehenden Ansprüche entspricht.
